# EUROPÄISCHE PATENTSCHRIFT

(11) **EP 2 505 332 B1**
(45) Veröffentlichungstag und Bekanntmachung des Hinweises auf die Patenterteilung: **11.12.2013**
(21) Anmeldenummer: 12001458.4
(22) Anmeldetag: 03.03.2012
(51) Int. Cl.: B29C 45/17, B25F 5/02, B27B 17/00, B29C 45/00

(54) **Kunststoffkörper und System zur Herstellung eines Kunststoffkörpers**
Plastic body and system for producing the plastic body
Corps en matière plastique et système de fabrication d'un corps en matière plastique

(30) Priorität: 30.03.2011 DE 102011015522
(43) Veröffentlichungstag der Anmeldung: 03.10.2012
(73) Patentinhaber: Andreas Stihl AG & Co. KG, 71336 Waiblingen (DE)
(72) Erfinder: Glißmann, Markus Dr., 73274 Notzingen (DE); von Hiller, Christoph, 70374 Stuttgart (DE); Frießem, Patrick, 71334 Waiblingen (DE)
(74) Vertreter: Reinhardt, Annette

(56) Entgegenhaltungen:
- EP-A1- 2 377 665
- WO-A1-2010/116580
- US-A- 4 964 217
- "Möglichkeiten und Grenzen der Projektilinjektionstechnik", IKV FACHTAGUNG GAS- UND WASSERINJEKTIONSTECHNIK POTENZIALE NUTZEN, HERAUSFORDERUNGEN MEISTERN,, 28. November 2007 (2007-11-28), Seiten 1-7, XP007905530,

## Beschreibung

Die Erfindung betrifft einen Kunststoffkörper und eine Fertigungsanlage zur Herstellung eines Kunststoffkörpers.

Aus der US 5,948,343 sind ein Hohlkörper und ein Verfahren zur Herstellung des Hohlkörpers bekannt, bei dem durch die Spritzgussform eine Kugel als Verdrängungskörper gedrückt wird. Die Kugel ist während des Einfüllens der Schmelze in der Spritzgussform gehalten und tritt am gegenüberliegenden Ende des Kunststoffkörpers zusammen mit der verdrängten Schmelze in eine Nebenkavität aus. Dadurch besitzt der Kunststoffkörper an seinen Enden große Öffnungen, deren Durchmesser dem Innendurchmesser des Kunststoffkörpers entspricht.

Aus der EP 2 377 665 A1 ist es bekannt, den Verdrängungskörper in dem Kunststoffkörper zu belassen, so dass eine große Austrittsöffnung vermieden werden kann. Die EP 2 377 665 A1 beschreibt auch eine Fertigungsanlage zur Herstellung eines rohrförmigen Kunststoffkörpers in einem Spritzgussverfahren. Die Kavität besitzt eine längliche Gestalt, und die Injektordüse zum Aufstecken eines Verdrängungskörpers ist zwischen den Enden des rohrförmigen Kunststoffkörpers angeordnet. Die Kavität kann beim Herstellen des rohrförmigen Kunststoffkörpers zunächst vollständig mit Schmelze gefüllt werden. Die überschüssige Schmelze wird von dem Projektil in eine Nebenkavität verdrängt, die über entsprechend gesteuerte Verschlussmittel mit der Hauptkavität verbunden ist. Der EP 2 377 665 A1 ist Stand der Technik gemäß Artikel 54(3) EPU.

Der Artikel "Möglichkeiten und Grenzen der Projektilinjektionstechnik", IKV Fachtagung "Gas- und Wasserinjektionstechnik - Potenziale nutzen, Herausforderungen meistern", 28./29. November 2007, Seiten 1 bis 7 zeigt in Bild 1 ein Verfahren zur Herstellung eines rohrförmigen Kunststoffkörpers mit Projektilinjektionstechnik. Das Projektil bleibt nach dem Spritzgussvorgang im Bauteil. Das Projektil wird von einem Ende des Bauteils zum anderen bewegt, so dass sich der rohrförmige Hohlkörper über annähernd die gesamte Bauteillänge erstreckt und nur an seinen Enden geschlossen ist.

Der Erfindung liegt die Aufgabe zugrunde, einen Kunststoffkörper anzugeben, der ein geringes Gewicht, eine hohe Stabilität und eine hohe Maßhaltigkeit besitzt. Eine weitere Aufgabe der Erfindung besteht darin, eine Fertigungsanlage zur Herstellung eines Kunststoffkörpers mit geringem Gewicht, hoher Stabilität und hoher Maßhaltigkeit anzugeben.

Diese Aufgabe wird durch einen Kunststoffkörper mit den Merkmalen des Anspruchs 1 gelöst. Bezüglich der Fertigungsanlage wird die Aufgabe durch ein System mit den Merkmalen des Anspruchs 11 gelöst.

Dadurch, dass der Kunststoffkörper in seinem mittleren Bereich als rohrförmiger Hohlkörper ausgebildet ist, ergibt sich eine hohe Stabilität bei geringem Gewicht. Dadurch, dass der Verdrängungskörper an einem Ende des rohrförmigen Hohlkörpers am Übergang zum ersten Vollkörper angeordnet ist, der Verdrängungskörper also im Kunststoffkörper verbleibt, kann eine große Austrittsöffnung für den Verdrängungskörper vermieden werden, so dass eine weitgehend geschlossene Außenfläche des Kunststoffkörpers herstellbar ist und als einzige Öffnung eine Öffnung für die Injektordüse verbleiben muss. Der rohrförmige Hohlkörper ist dabei vorteilhaft in einem Projektilinjektions-Verfahren hergestellt, bei dem der Verdrängungskörper durch den mittleren Bereich geschoben wurde, und zwar von einem Fluid. Der am zweiten Ende des rohrförmigen Hohlkörpers ausgebildete Hohlraum ist dagegen nicht von dem Verdrängungskörper hergestellt, sondern nur vom Fluid. Dadurch kann ein Einfallen des Kunststoffs am zweiten Ende des rohrförmigen Hohlkörpers vermieden werden. Der Hohlraum wird bei der Herstellung durch entsprechend langes Halten des Fluiddrucks erzeugt. Der Hohlraum ist demnach nicht in einem Projektilinnendruck-Verfahren, sondern in einem Fluidinnendruck-Verfahren hergestellt. Durch die Kombination der beiden auf unterschiedliche Weise hergestellten Abschnitte des Kunststoffkörpers lässt sich ein geringes Gewicht des Kunststoffkörpers herstellen. Gleichzeitig kann der mittlere Bereich so angeordnet werden, dass sich keine zu starken Umlenkungen und Richtungsänderungen für den Verdrängungskörper bei der Herstellung ergeben. Die Position, in der die Injektordüse in den Kunststoffkörper ragt, kann so gewählt werden, dass die Öffnung nicht stört, beispielsweise durch eine Positionierung derart, dass sie durch andere Bauteile verdeckt wird oder als Befestigungsöffnung nutzbar ist.

Der rohrförmige Hohlkörper besitzt an seiner Innenwandung vorteilhaft eine sehr geringe Rauheit. Die maximale Profilhöhe, also der Abstand zwischen der Linie der Profilkuppen und der Profiltäler beträgt vorteilhaft weniger als 0,1 mm. Die Wandstärke ist sehr gering. Im Bereich des Hohlkörpers ist die maximale Profilhöhe um ein Vielfaches größer und beträgt insbesondere mehr als 0,3 mm, insbesondere mehr als 0,5 mm. Die Wandstärke in diesem Bereich beträgt ein Vielfaches, vorteilhaft etwa das 2,5fache bis etwa das 5fache der Wandstärke des rohrförmigen Hohlkörpers.

Es ist vorgesehen, dass der Verdrängungskörper eine Öffnung für einen Aufsteckabschnitt einer Injektordüse besitzt. Dadurch kann der Verdrängungskörper bei der Herstellung vor dem Einbringen von Schmelze auf die Injektordüse aufgesetzt werden. Dadurch kann die bei der Herstellung entstehende Öffnung ins Innere des Kunststoffkörpers klein gehalten werden. Der rohrförmige Hohlkörper ist insbesondere an einem Ende geschlossen und an dem anderen Ende bis auf die durch die Injektordüse gebildete Öffnung geschlossen. Die Öffnung im Verdrängungskörper ist dabei insbesondere konisch, so dass der Verdrängungskörper fest auf die Injektordüse aufgesteckt werden kann.

Die Gestaltung des Verdrängungskörpers ist beeinflusst durch die Streuung der Wanddicke des Kunststoffkörpers. Um eine möglichst geringe Streuung der Wanddicke zu erreichen und dadurch geringe Wanddicken zu ermöglichen, ist vorgesehen, dass der Verdrängungskörper einen zylindrischen Abschnitt und einen sich verjüngenden Abschnitt besitzt, wobei der sich verjüngende Abschnitt in den Vollkörper ragt. Der zylindrische Abschnitt formt dabei insbesondere die Abschnitte aus, in denen der Kunststoffkörper gerade verläuft, während der sich verjüngende Abschnitt Biegungen des Kunststoffkörpers ausformt. Vorteilhaft ist der sich verjüngende Abschnitt als Paraboloid oder als Rotationskörper aus einem Kreissegment ausgebildet. Das Verhältnis der Höhe des Verdrängungskörpers zum Durchmesser im zylindrischen Abschnitt beträgt vorteilhaft von etwa 0,6 bis etwa 2. Als besonders vorteilhaft hat sich ein Verhältnis von Höhe zu Durchmesser von etwa 1,25 herausgestellt. Der zylindrische Abschnitt ist vorteilhaft schmal ausgebildet. Die Höhe des zylindrischen Abschnitts beträgt bezogen auf den Durchmesser im zylindrischen Abschnitt vorteilhaft von etwa 0,1 bis etwa 0,3. Der Durchmesser des zylindrischen Abschnitts entspricht dabei dem größten Durchmesser des sich verjüngenden Abschnitts.

Um ein geringes Gewicht des Verdrängungskörpers bei hoher Steifigkeit zu erreichen, ist vorteilhaft vorgesehen, dass der Verdrängungskörper an der den Hohlkörper begrenzenden Seite mindestens eine Versteifungsrippe besitzt. Es ist vorgesehen, dass der Kunststoffkörper eine Injektoröffnung besitzt. Das Verhältnis des Durchmessers der Injektoröffnung zum Durchmesser des Verdrängungskörpers ist vorteilhaft kleiner als etwa 0,7, insbesondere kleiner als etwa 0,5, vorteilhaft kleiner als etwa 0,3. Dadurch ergibt sich eine geringe Beeinträchtigung der Ergonomie und des Erscheinungsbildes des Kunststoffkörpers durch die Injektoröffnung bei geringem Gewicht des Kunststoffkörpers.

Der Verdrängungskörper, der im Kunststoffkörper verbleibt, wird vorteilhaft dazu genutzt, einen allmählichen Steifigkeitsübergang vom Hohlkörper zum ersten Vollkörper auszubilden. Über die Gestaltung und das Material des Verdrängungskörpers kann dieser Steifigkeitsübergang eingestellt werden. Vorteilhaft ist die Festigkeit des Kunststoffkörpers im Bereich des Verdrängungskörpers geringer als im Bereich des ersten Vollkörpers und größer als die Festigkeit des Hohlkörpers. Dadurch werden große Steifigkeitssprünge beim Übergang von Hohlkörper zu Vollkörper vermieden. Um ein geringes Gewicht zu erreichen, ist vorgesehen, dass die Gesamtlänge der Vollkörper weniger als 50% der Länge des rohrförmigen Hohlkörpers beträgt. Der Kunststoffkörper ist insbesondere ein Griffrohr für ein tragbares, handgeführtes Arbeitsgerät.

Für die Fertigungsanlage ist vorgesehen, dass die Injektordüse einen Aufsteckabschnitt für einen Verdrängungskörper besitzt. Dadurch kann der Verdrängungskörper in der Kavität angeordnet werden, so dass kein Eindringen des Verdrängungskörpers durch die Außenwand des Kunststoffkörpers während des Spritzgussvorgangs notwendig ist. Die benötigte Öffnung im Kunststoffkörper ist nur durch den Außendurchmesser der Injektordüse begrenzt, der deutlich kleiner als der Außendurchmesser des Verdrängungskörpers gewählt werden kann. Die kleine Öffnung ermöglicht die Herstellung des Kunststoffkörpers mit Gasinjektion bei geringer Einschränkung der Gestaltungsfreiheit. Ist der Kunststoffkörper ein Griffrohr, so ermöglicht die kleine Öffnung die Herstellung mit Gasinjektion ohne Restriktion an die Ergonomie des Griffrohrs in diesem Bereich. Die Kavität besitzt dabei eine längliche Gestalt mit einem ersten Ende und einem zweiten Ende. Die längliche Gestalt kennzeichnet dabei eine Gestaltung mit einem ersten und einem zweiten Ende, zwischen denen sich die Kavität erstreckt. Die Kavität kann dabei gewunden sein und unterschiedliche Querschnitte besitzen. Die Injektordüse ist dabei zwischen den Enden der Kavität angeordnet. Dadurch ist eine variable Positionierung der Injektordüse möglich. Gleichzeitig kann von der Injektordüse in Richtung auf das eine Ende ein rohrförmiger Hohlkörper in einem Projektilinnendruck-Verfahren hergestellt werden und in Richtung auf das andere Ende ein Hohlraum in einem Fluidinnendruck-Verfahren. Dadurch ist ein Einfallen des Kunststoffkörpers an seinen Endbereichen vermieden, und es wird ein geringes Gewicht bei hoher Stabilität erreicht.

Vorteilhaft beträgt das Verhältnis des größten Durchmessers des Aufsteckabschnitts zum Durchmesser des Verdrängungskörpers weniger als etwa 0,7, insbesondere weniger als etwa 0,5, vorteilhaft weniger als 0,3. Die Öffnung, die der Aufsteckabschnitt im Kunststoffkörper abbildet, ist dadurch deutlich kleiner als der freie Querschnitt im rohrförmigen Hohlkörper des Kunststoffkörpers.

Um eine sichere Fixierung des Verdrängungskörpers an der Injektordüse sicherzustellen, ist vorgesehen, dass der Aufsteckabschnitt konisch ausgebildet ist. So können Fertigungstoleranzen des Verdrängungskörpers ausgeglichen werden. Der Aufsteckabschnitt ist vorteilhaft vergleichweise lang und dünn ausgebildet. Der Aufsteckabschnitt ist dabei vorteilhaft zugleich der Abschnitt der Injektordüse, der durch die Wand des Kunststoffkörpers in den innenliegenden Hohlraum ragt.

Die Injektordüse ist vorteilhaft auch in ihrem größten Durchmesser vergleichsweise klein ausgebildet. Das Verhältnis des Außendurchmessers des Kunststoffkörpers in seinem rohrformigen Bereich zum größten Durchmesser der Injektordüse ist vorteilhaft größer als etwa 1,3, insbesondere größer als etwa 2, vorteilhaft größer als etwa 3. Dadurch ist die Vertiefung, die die Injektordüse in der Außenwand des Kunststoffkörpers hinterlässt, vergleichsweise klein.

Um zu vermeiden, dass der Verdrängungskörper durch den Anguss aus der Kavität austreten kann, ist vorgesehen, dass der Durchmesser des Angusses kleiner als der Durchmesser des Verdrängungskörpers ist. Die Fertigungsanlage besitzt eine Nebenkavität, die über ein Absperrelement von der Kavität trennbar ist. In die Nebenkavität kann überschüssige Schmelze durch den Verdrängungskörper ausgeschoben werden. Der Verdrängungskörper verbleibt in der Kavität und in dem Kunststoffkörper. Um zu vermeiden, dass der Verdrängungskörper in die Nebenkavität austreten kann, ist vorgesehen, dass die Verbindungsöffnung von Kavität und Nebenkavität einen Durchmesser besitzt, der kleiner als der Durchmesser des Verdrängungskörpers ist. Vorteilhaft werden die Schmelze und das Fluid von gegenüberliegenden Seiten der Kavität aus in die Kavität eingefüllt. Dadurch wird auch ein Verrutschen des Verdrängungskörpers vermieden. Der Verdrängungskörper wird von der Schmelze auf die Injektordüse gedrückt.

Ausführungsbeispiele der Erfindung werden im Folgenden anhand der Zeichnung erläutert. Es zeigen:
- Fig. 1: eine schematische Seitenansicht einer Motorsäge,
- Fig. 2: eine schematische Darstellung des Griffrohrs der Motorsäge,
- Fig. 3: eine schematische Darstellung einer Fertigungsanlage zur Herstellung des Griffrohrs,
- Fig. 4: eine Seitenansicht der Injektordüse,
- Fig. 5 bis Fig. 7: schematische Schnittdarstellungen, die den Fertigungsvorgang erläutern,
- Fig. 8: eine schematische Darstellung des Verdrängungskörpers beim Durchtritt durch das Griffrohr,
- Fig. 9: ein Diagramm, das die Wandstärke in Abhängigkeit des Umlenkwinkels des Verdrängungskörpers zeigt,
- Fig. 10: eine schematische Darstellung von Ausführungsformen des Verdrängungskörpers,
- Fig. 11: eine perspektivische Darstellung des Verdrängungskörpers aus Fig. 2,
- Fig. 12: eine Seitenansicht des Verdrängungskörpers aus Fig. 11,
- Fig. 13: eine Schnittdarstellung entlang der Linie XIII-XIII in Fig. 12,
- Fig. 14: eine schematische Schnittdarstellung durch das Griffrohr im Bereich des rohrförmigen Hohlkörpers,
- Fig. 15: eine schematische Schnittdarstellung durch das Griffrohr im Bereich des Hohlraums,
- Fig. 16: ein Diagramm, das die Profilhöhe der Innenwand im Bereich des Hohlraums zeigt und
- Fig. 17: ein Diagramm, das die Profilhöhe der Innenwand im Bereich des rohrförmigen Hohlkörpers zeigt.

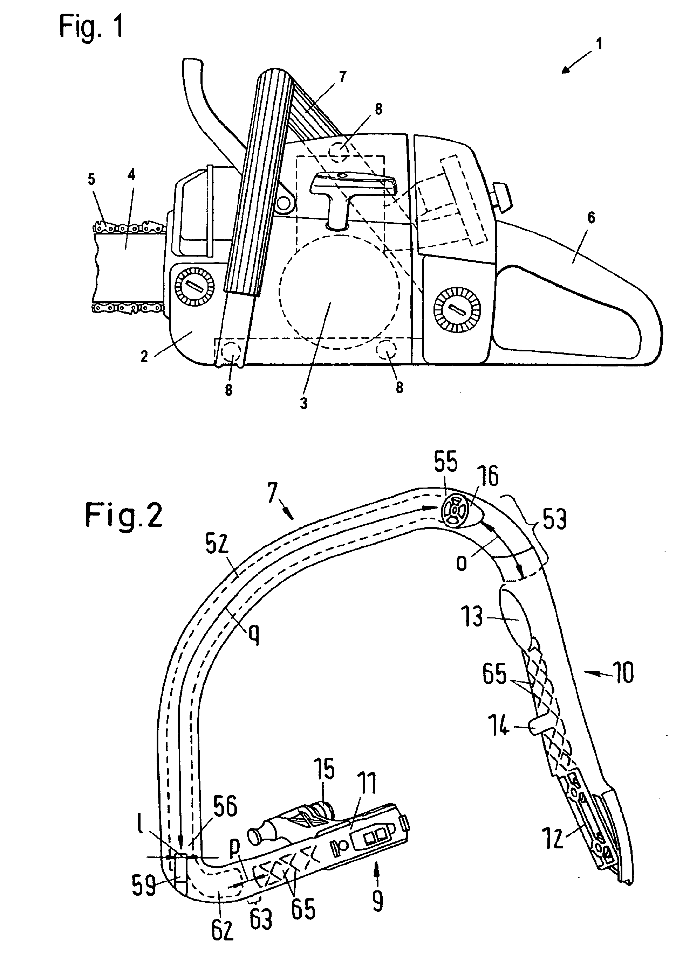

Fig. 1 zeigt als Ausführungsbeispiel für ein handgeführtes Arbeitsgerät eine Motorsäge 1. Die Motorsäge 1 besitzt ein Gehäuse 2, in dem ein Antriebsmotor 3 angeordnet ist. Der Antriebsmotor 3 ist vorteilhaft als Verbrennungsmotor ausgebildet. Die Motorsäge 1 besitzt eine Führungsschiene 4, an der eine Sägekette 5 angeordnet ist, die von dem Antriebsmotor 3 angetrieben ist. An dem Gehäuse 2 sind ein hinterer Handgriff 6 und ein Griffrohr 7 über Antivibrationselemente 8 festgelegt. Das Griffrohr 7 ist als Bügelgriff ausgebildet. Entsprechende Bügelgriffe werden auch bei anderen handgeführten Arbeitsgeräten, beispielsweise bei Trennschleifern oder dgl. eingesetzt.

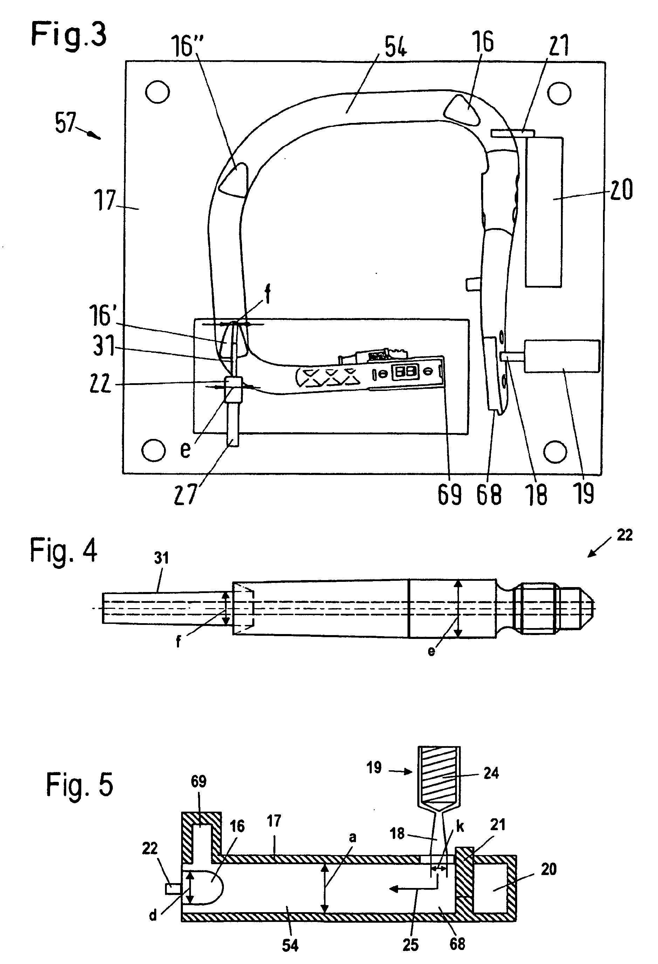

Fig. 2 zeigt den Aufbau des Griffrohrs 7 im Einzelnen. Das Griffrohr 7 besitzt einen ersten Endbereich 9, an dem ein erster Befestigungsabschnitt 11 ausgebildet ist. Der Befestigungsabschnitt 11 dient zur Fixierung des Griffrohrs 7 an einem Griffrahmen. Zur Fixierung eines Antivibrationselements 8 ist ein Gewindestutzen 15 vorgesehen. Das Griffrohr 7 besitzt einen zweiten Endbereich 10 mit einem zweiten Befestigungsabschnitt 12. Im Bereich des zweiten Endes 10 ist außerdem ein Anschlagstutzen 14 für einen Dämpfer und eine Aufnahme 13 für ein Antivibrationselement 8 angeordnet. Das Griffrohr 7 besitzt einen mittleren Bereich, der als rohrförmiger Hohlkörper 52 ausgebildet ist. Der rohrförmige Hohlkörper 52 besitzt ein erstes Ende 55 benachbart zum zweiten Endbereich 10 und ein zweites Ende 56, das benachbart zum ersten Endbereich 9 angeordnet ist. Am ersten Ende 55 ist der rohrförmige Hohlkörper 52 von einem ersten Vollkörper 53 verschlossen. Der erste Vollkörper 53 besitzt eine in Längsrichtung des Griffrohrs 7 gemessene Länge o. Der rohrförmige Hohlkörper 52 besitzt eine in Längsrichtung gemessene Länge q. An den ersten Vollkörper 53 schließen sich die Aufnahme 13 und der Anschlagstutzen 14 an. In diesem Bereich besitzt das Griffrohr 7 eine Vielzahl von Rippen 65, die zur Versteifung dienen. Am Übergang vom Hohlkörper 52 zum Vollkörper 53 ist am ersten Ende 55 des Hohlkörpers 52 ein Verdrängungskörper 16 im Inneren des Griffrohrs 7 angeordnet und fest im Außenmaterial des Griffrohrs 7 gehalten. Der Verdrängungskörper 16 ist in Fig. 2 schematisch eingezeichnet und von außen nicht sichtbar. Benachbart zum zweiten Ende 56 des Hohlkörpers 52 besitzt das Griffrohr 7 eine Injektoröffnung 59, die das Innere des Hohlkörpers 52 mit der Umgebung verbindet. Die Injektoröffnung 59 besitzt einen kleinsten Durchmesser 1. Das Verhältnis des Durchmessers 1 der Injektoröffnung 59 zum Durchmesser d des Verdrängungskörpers 16 (Fig. 5) ist vorteilhaft kleiner als 0,7, insbesondere kleiner als 0,5.

Am zweiten Ende 56 des rohrförmigen Höhlkörpers 52 schließt sich ein Hohlraum 62 an. Im Bereich des Hohlraums 62 ist die Innenwand des Griffrohrs 7 sehr rau, wie im Folgenden noch näher beschrieben wird. Der Hohlraum 62 und damit auch der Hohlkörper 52 sind an diesem Ende von einem zweiten Vollkörper 63 verschlossen. Der zweite Vollkörper 63 besitzt eine in Längsrichtung des Griffrohrs 7 gemessene Länge p. Daran schließt sich der Befestigungsabschnitt 11 an, der ebenfalls Rippen 65 zur Versteifung besitzt.

Um ein geringes Gewicht des Griffrohrs 7 zu erreichen, ist vorgesehen, dass die Gesamtlänge der Längen o und p der Vollkörper 53 und 63 weniger als 50% der Länge q des rohrförmigen Hohlkörpers 52 betragen. Vorteilhaft beträgt die Summe der Längen o und p weniger als 30% der Länge q. Die Vollkörper 53 und 63 können sehr kurz ausgebildet sein und lediglich zum Verschließen des Hohlkörpers 52 und Hohlraums 62 dienen.

Fig. 3 zeigt schematisch eine Fertigungsanlage 57 zur Herstellung des Griffrohrs 7. Die Fertigungsanlage 57 besitzt eine Spritzgussform 17, in der eine Kavität 54 und eine Nebenkavität 20 ausgebildet sind. Die Spritzgussform 17 besitzt ein Absperrelement 21, mit dem die Nebenkavität 20 mit der Kavität 54 verbunden oder von dieser getrennt werden kann. Die Kavität 54 besitzt ein erstes Ende 68, angrenzend zu dem der zweite Endbereich 10 des Griffrohrs 7 abgeformt wird, sowie ein zweites Ende 69, angrenzend zu dem der erste Endbereich 10 des Griffrohrs 7 abgeformt wird. Zur Zufuhr von Kunststoffschmelze ist ein Schmelzenförderer 19 vorgesehen, der mit einem Anguss 18 in die Kavität 54 mündet. Der Anguss 18 ist benachbart zum ersten Ende 68 angeordnet. Benachbart zum ersten Ende 68 ist auch die Nebenkavität 20 an die Kavität 54 angeschlossen. Bei der in Fig. 3 gezeigten Gestaltung ist das Absperrelement 21 in Längsrichtung des Griffrohrs 7 zwischen dem Anguss 18 und dem zweiten Ende 69 der Kavität 54 angeordnet.

In einem Abstand zum zweiten Ende 69 ragt eine Injektordüse 22 mit einem konischen Aufsteckabschnitt 31 in die Kavität 54. Der Aufsteckabschnitt 31 besitzt einen größten Durchmesser f (siehe auch Fig. 4). Auf den Aufsteckabschnitt 31 ist ein Verdrängungskörper 16 aufsteckbar, der in dieser Stellung mit 16' bezeichnet ist. Die Injektordüse 22 ist an einen Fluidanschluss 27 angeschlossen, über den ein Fluid, also ein Gas oder eine Flüssigkeit, vorteilhaft ein Gas, insbesondere Stickstoff, in die Kavität 54 zugeführt werden kann. Mit 16" ist eine mittlere Position des Verdrängungskörpers 16 bezeichnet und mit 16 die Endlage des Verdrängungskörpers 16 im Griffrohr 7.

Die Injektordüse 22 besitzt einen größten Durchmesser e, wie auch in Fig. 4 gezeigt. Der größte Durchmesser e der Injektordüse 22 ist deutlich kleiner als der in Fig. 5 gezeigte Durchmesser a des Griffrohrs 7. Das Verhältnis des Durchmessers a des Griffrohrs 7 zum Durchmesser e der Injektordüse ist vorteilhaft größer als etwa 1,3, insbesondere größer als etwa 2, insbesondere größer als etwa 3. Der größte Außendurchmesser der Injektordüse 22 wird vorteilhaft so klein wie möglich ausgeführt, um die Vertiefung an der Außenseite des Griffrohrs 7, die durch die Injektordüse abgebildet wird, möglichst gering zu halten. Auch der Außendurchmesser f des Aufsteckabschnitts 31 wird vorteilhaft so klein wie möglich gewählt. Der Durchmesser f beträgt vorteilhaft weniger als 10 mm. Das Verhältnis des Durchmessers f zum Durchmesser d des Verdrängungskörpers 16 ist vorteilhaft kleiner als etwa 0,7, insbesondere kleiner als etwa 0,5.

Die Figuren 5 bis 7 verdeutlichen den Verfahrensablauf bei der Herstellung des Griffrohrs 7. Zunächst wird, wie in Fig. 5 durch den Pfeil 25 gezeigt, Schmelze über den Anguss 18 vom ersten Ende 68 zum zweiten Ende 69 zugeführt. Der Verdrängungskörper 16 wird vor dem Einfüllen der Schmelze und insbesondere vor dem Schließen der Spritzgussform 17 auf den Aufsteckabschnitt 31 der Injektordüse 22 aufgesteckt und ist zu Beginn der Schmelzezufuhr bereits auf der Injektordüse 22 fest in der Kavität 54 gehalten. Der Schmelzenförderer 19 umfasst eine Schnecke 24 zur Förderung der Schmelze. Der Anguss 18 besitzt einen Durchmesser k, der kleiner als der Durchmesser d des Verdrängungskörpers 16 ist. Der Durchmesser d ist kleiner als der Durchmesser a des Griffrohrs 7. Beim Einfüllen der Schmelze in die Kavität 54 ist das Absperrelement 21, wie Fig. 5 zeigt, geschlossen und die Nebenkavität 20 nicht mit der Kavität 54 verbunden.

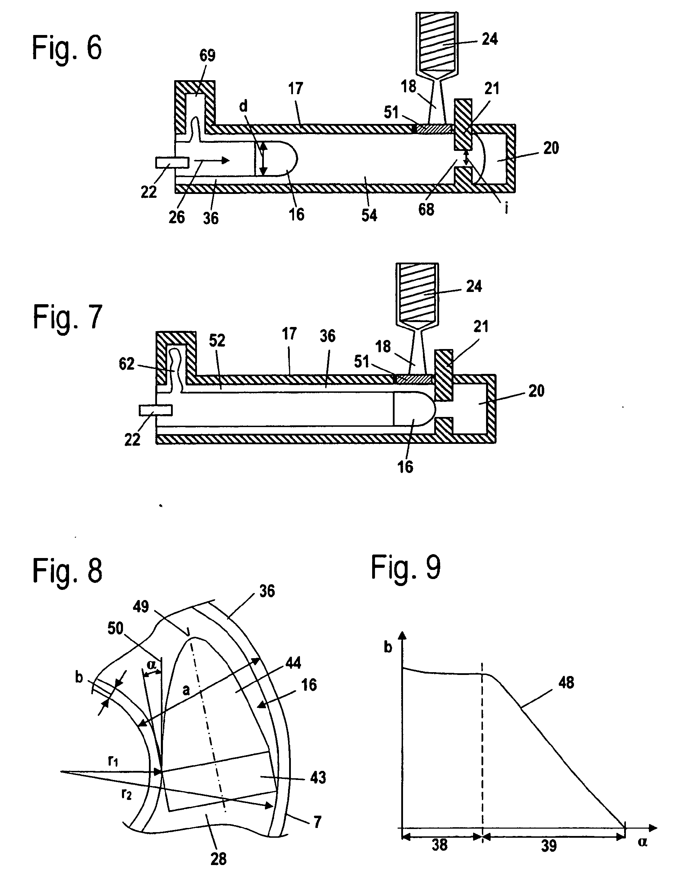

Nachdem die gesamte Kavität 54 mit Schmelze gefüllt wurde, wird der Anguss 18 von einem Schieber 51 (Fig. 6) verschlossen. Gleichzeitig öffnet das Absperrelement 21 und verbindet die Kavität 54 mit der Nebenkavität 20. Wie Fig. 6 zeigt, gibt das Absperrelement 21 eine Verbindungsöffnung 58 frei, deren Durchmesser i ebenfalls kleiner als der Durchmesser d des Verdrängungskörpers 16 ist. Nachdem der Schieber 51 geschlossen und das Absperrelement 21 geöffnet wurde, wird Fluid über die Injektordüse 22 zugeführt. Das Fluid drückt den Verdrängungskörper 16 vor sich her durch die Kavität 54. Dies ist durch den Pfeil 26 verdeutlicht. Da der Durchmesser d des Verdrängungskörpers 16 kleiner als der Innendurchmesser a der Kavität 54, der dem Außendurchmesser des Griffrohrs 7 entspricht, ist, verbleibt an der Wandung der Kavität 54 eine Wand 36, die nach dem Entformen die Wand des Griffrohrs 7 bildet. Die Schmelze aus der Kavität 54 wird vom Verdrängungskörper 16 in die Nebenkavität 20 gedrückt. Wie Fig. 7 zeigt, wird der Verdrängungskörper 16 bis in den Bereich des Absperrelements 21 gedrückt. Hier verbleibt der Verdrängungskörper 16 im Griffrohr 7. Wie die Figuren 6 und 7 zeigen, strömt das Fluid nicht nur in Richtung auf das erste Ende 68, sondern von der Injektordüse 22 aus auch in Richtung auf das zweite Ende 69. Da in Richtung auf das zweite Ende 69 kein Verdrängungskörper geschoben wird, ergibt sich hier eine unregelmäßige Wandstärke und Wandstruktur. Das in diesem Bereich strömende Fluid bildet den Hohlraum 62 aus, wie in Fig. 7 gezeigt.

Wie Fig. 8 zeigt, besitzt der Verdrängungskörper 16 einen zylindrischen Abschnitt 43 und einen daran anschließenden, sich verjüngenden Abschnitt 44. Der Verdrängungskörper 16 ist in einer Biegung des Griffrohrs 7 gezeigt. Der Verdrängungskörper 16 ist im Inneren des rohrförmigen Hohlkörpers 52 angeordnet. Die Wand 36 des Griffrohrs 7 besitzt eine Wandstärke b. Die Innenfläche der Wand 36 verläuft an ihrer Innenseite mit einem Innenradius r₁ und an ihrer Außenseite mit einem Außenradius r₂. Der zylindrische Abschnitt 43 berührt die Wand 36 umlaufend und formt so den Innenraum des rohrförmigen Hohlkörpers 52 aus. Der Verdrängungskörper 16 besitzt eine Längsmittelachse 49, die gegenüber einer Tangente 50 an die Innenwand des Hohlkörpers 52 um einen Winkel α geneigt ist.

Fig. 9 zeigt mit einer Kurve 48 den Zusammenhang zwischen der Wandstärke b und dem Winkel α. In einem ersten Winkelbereich 38 ist die Wandstärke weitgehend konstant. In diesem Winkelbereich formt der zylindrische Abschnitt 43 die Innenkontur. Bei größeren Drehwinkeln α, also im zweiten Winkelbereich 39, kommt der sich verjüngende Abschnitt 44 in Eingriff mit der Innenkontur und formt die Innenkontur aus. Aufgrund der größeren Schrägstellung des Verdrängungskörpers 16 nimmt die Wandstärke b mit zunehmendem Drehwinkel α ab.

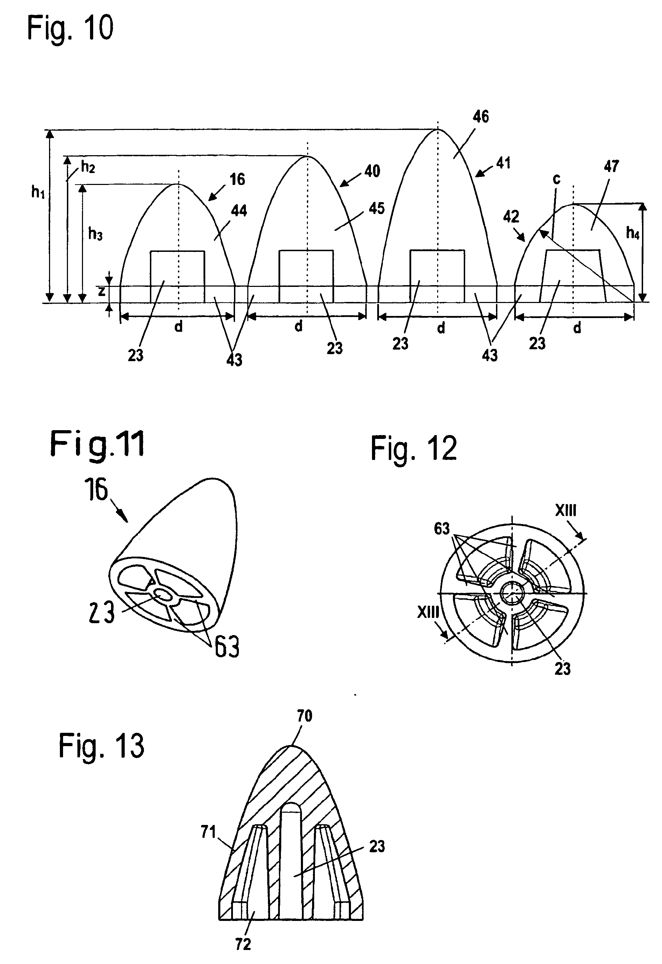

Fig. 10 zeigt unterschiedliche Gestaltungsvarianten für Verdrängungskörper 16, 40, 41 und 42. Alle Verdrängungskörper 16, 40, 41 und 42 besitzen einen zylindrischen Abschnitt 43, der eine Höhe z besitzt, sowie einen größten Durchmesser d und eine Öffnung 23, die zum zylindrischen Abschnitt 43 hin öffnet und die konisch ausgebildet ist. Dies ist für den Verdrängungskörper 42 zur Verdeutlichung stark übertrieben gezeigt. Mit der Öffnung 23 wird der Verdrängungskörper 16, 40, 41, 42 auf die Injektordüse 22 aufgesteckt. An den zylindrischen Abschnitt 43 schließen unterschiedliche, sich verjüngende Abschnitte 44, 45, 46 und 47 an. Die Abschnitte 44, 45 und 46 sind jeweils als Paraboloid ausgebildet, also als Rotationskörper, der sich bei Rotation einer Parabelkurve ergibt. Der Verdrängungskörper 16 besitzt eine Höhe h₃, die etwa dem Durchmesser d entspricht. Bei dieser Gestaltung ergeben sich sehr günstige Restwanddicken. Der Verdrängungskörper 40 besitzt eine Höhe h₂, die das 1,25fache des Durchmessers d beträgt. Der Verdrängungskörper 41 besitzt eine Höhe h₁, die dem 1,5fachen des Durchmessers d entspricht. Mit zunehmendem Verhältnis von Höhe h zu Durchmesser d nimmt der ausformbare minimale Radius ab. Der sich verjüngende Abschnitt 47 ist durch Rotation eines Kreissegments mit dem Radius c gebildet. Die Höhe h₄ des Verdrängungskörpers 42 beträgt das 0,8fache bis 0,9fache des Durchmessers d.

Das Verhältnis der Höhe des Verdrängungskörpers 16, 40, 41, 42 zum Durchmesser d des zylindrischen Abschnitts 43 beträgt vorteilhaft von etwa 0,6 bis etwa 2. Das Verhältnis der Höhe z des zylindrischen Abschnitts zum Durchmesser d im zylindrischen Abschnitt beträgt vorteilhaft von etwa 0,1 bis etwa 0,3.

Durch die in Fig. 10 gezeigten Profilgestaltungen eines Verdrängungskörpers 16, 40, 41, 42 kann auch die Steifigkeit des Griffrohrs 7 am Übergang vom Hohlkörper 52 zum Vollkörper 53 angepasst werden. Die Steifigkeit des Griffrohrs 7 im Bereich des Verdrängungskörpers 16, 40, 41, 42 liegt vorteilhaft zwischen der Steifigkeit des Hohlkörpers und der Steifigkeit des Vollkörpers. Dadurch wird ein sprunghafter Steifigkeitsübergang des Griffrohrs 7 vermieden, und die Stabilität wird erhöht. Ein sprunghafter Steifigkeitsübergang könnte auch zu einer Verschlechterung der dynamischen Beschleunigungskennwerte führen. Dies wird durch die vorgeschlagene Gestaltung vermieden.

Die Figuren 11 bis 13 zeigen den Verdrängungskörper 16 im Einzelnen. Von seiner flachen Unterseite aus besitzt der Verdrängungskörper 16 mittig die Öffnung 23, die, wie Fig. 13 zeigt, leicht konisch ausgebildet ist und in Richtung auf die abgeflachte Spitze 70 des Verdrängungskörpers 16 hin zuläuft. Der Verdrängungskörper 16 besitzt außerdem einen Außenmantel 71, der über Versteifungsrippen 64 mit dem die Öffnung 23 umgebenden Bereich verbunden ist. Radial zwischen der Öffnung 23 und dem Außenmantel 71 sind vier Vertiefungen 72 angeordnet, die von den Versteifungsrippen 63 voneinander getrennt sind. Aufgrund der Versteifungsrippen 63 ergeben sich ein geringes Gewicht und eine hohe Stabilität des Verdrängungskörpers 16. Der Verdrängungskörper 16 kann auf grund der Vertiefungen 72 gut im Spritzgussverfahren hergestellt werden, da Materialansammlungen so vermieden werden. Dadurch kann eine glatte Außenkontur des Außenmantels 71 sichergestellt werden.

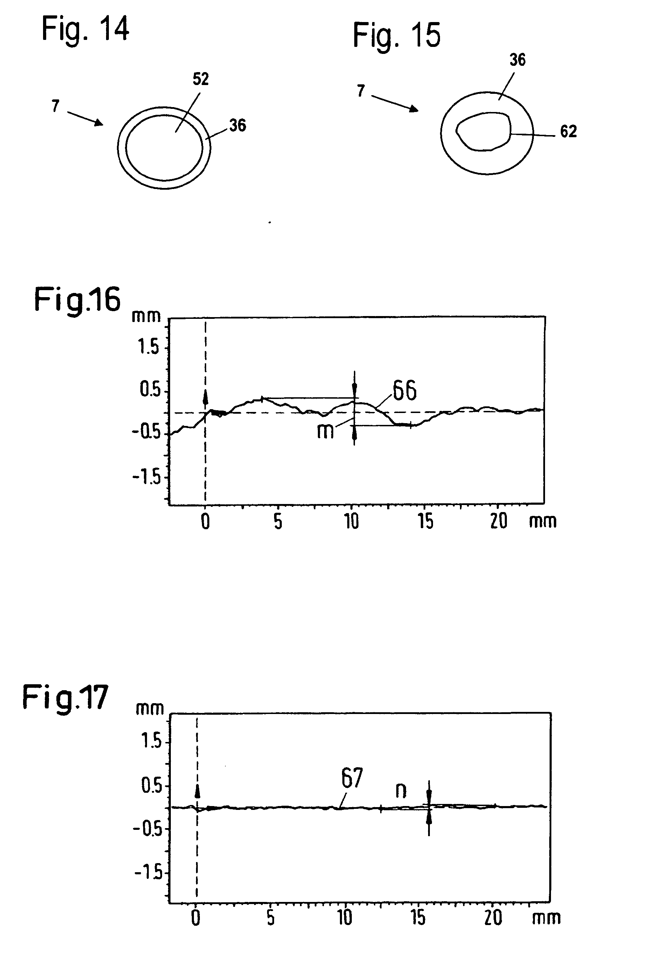

Die Figuren 14 und 15 zeigen Querschnitte durch das Griffrohr 7. Fig. 14 zeigt einen Querschnitt im Bereich des rohrförmigen Hohlkörpers 52. Wie Fig. 14 zeigt, ist die Dicke der Wand 36 vergleichsweise konstant. In diesem Bereich wurde das Griffrohr 7 mit Verdrängungskörper 16 hergestellt.

Fig. 15 zeigt einen Schnitt durch das Griffrohr 7 im Bereich des Hohlraums 62. In diesem Bereich ist das Griffrohr 7 ohne Verdrängungskörper lediglich durch Einbringen eines Fluids ins Innere der Kavität, also im Fluidinnendruck-Verfahren gebildet. Die sich ergebende Innenkontur 37 ist sehr rau und ungleichmäßig, so dass sich eine sehr große Schwankungsbreite in der Wanddicke ergibt.

Fig. 16 zeigt die Schwankung der Wanddicke als Linie 66. Die Profilhöhe m, also der Abstand zwischen dem höchsten Profilberg und dem niedrigsten Profiltal, beträgt mehr als 0,5 mm. Im Ausführungsbeispiel beträgt die Profilhöhe m mehr als 0,6 mm.

Fig. 17 zeigt das Profil des rohrförmigen Hohlkörpers 52 als Linie 67. Die Profilhöhe n ist hier sehr gering und beträgt weniger als 0,1 mm. Durch die sehr glatte Innenwand im Bereich des rohrförmigen Hohlkörpers 52 kann die Wanddicke sehr gering ausgebildet werden. Im Bereich des Hohlraums 62 muss die Wanddicke größer gewählt werden, um unzulässig geringe Wanddicken zuverlässig zu vermeiden. Die Wanddicke im Bereich des Hohlraums 62 beträgt im Ausführungsbeispiel von etwa 5 mm bis etwa 6,5 mm. Die Wanddicke des Griffrohrs 7 im Bereich des rohrförmigen Hohlkörpers 52 beträgt weniger als 2 mm.

## Patentansprüche

1. Kunststoffkörper, insbesondere ein Griffrohr (7) für ein tragbares, handgeführtes Arbeitsgerät, wobei der Kunststoffkörper in einem mittleren Bereich als rohrförmiger Hohlkörper (52) ausgebildet ist, wobei der rohrförmige Hohlkörper (52) an beiden Enden (55, 56) jeweils von einem geschlossenen Vollkörper (53, 63) verschlossen ist, wobei an einem ersten Ende (55) des rohrförmigen Hohlkörpers (52) ein Verdrängungskörper (16, 40, 41, 42) angeordnet ist, der am Übergang vom Hohlkörper (52) zum ersten Vollkörper (53) angeordnet ist, wobei
an einem zweiten Ende (56) des rohrförmigen Hohlkörpers (52) ein Hohlraum ausgebildet ist, der sich zwischen dem rohrförmigen Hohlkörper (52) und dem zweiten Vollkörper (63) erstreckt.

2. Kunststoffkörper nach Anspruch 1, wobei
der Verdrängungskörper (16, 40, 41, 42) eine Öffnung (23) für einen Aufsteckabschnitt (31) einer Injektordüse (22) besitzt.

3. Kunststoffkörper nach Anspruch 2, wobei
der Verdrängungskörper (16, 40, 41, 42) einen zylindrischen Abschnitt (43) und einen sich verjüngenden Abschnitt (44, 45, 46, 47) besitzt, wobei der sich verjüngende Abschnitt (44, 45, 46, 47) in den ersten Vollkörper (53) ragt.

4. Kunststoffkörper nach Anspruch 3, wobei
der sich verjüngende Abschnitt (44, 45, 46) des Verdrängungskörpers (16, 40, 41) als Paraboloid ausgebildet ist.

5. Kunststoffkörper nach Anspruch 3, wobei
der sich verjüngende Abschnitt (47) des Verdrängungskörpers (42) ein Rotationskörper aus einem Kreissegment ist.

6. Kunststoffkörper nach einem der Ansprüche 3 bis 5, wobei
das Verhältnis der Höhe (h₁, h₂, h₃, h₄) des Verdrängungskörpers (16, 40, 41, 42) zum Durchmesser (d) des zylindrischen Abschnitts (43) des Verdrängungskörpers (16, 40, 41, 42) von 0,6 bis 2 beträgt, wobei das Verhältnis der Höhe (z) des zylindrischen Abschnitts (43) zum Durchmesser (d) im zylindrischen Abschnitt insbesondere von 0,1 bis 0,3 beträgt.

7. Kunststoffkörper nach einem der Ansprüche 1 bis 6,
wobei der Verdrängungskörper (16, 40, 41, 42) an der den Hohlkörper (52) begrenzenden Seite mindestens eine Versteifungsrippe (64) besitzt.

8. Kunststoffkörper nach einem der Ansprüche 1 bis 7, wobei
der Kunststoffkörper eine Injektoröffnung (59) besitzt, die etwa zwischen dem rohrförmigen Hohlkörper (52) und dem Hohlraum (62) angeordnet ist, wobei die Injektoröffnung (59) insbesondere die einzige Verbindung des Hohlkörpers (52) nach außen ist, wobei das Verhältnis des Durchmessers (1) der Injektoröffnung (59) zum Durchmesser (d) des Verdrängungskörpers (16, 40, 41, 42) vorteilhaft kleiner als 0,7, insbesondere kleiner als 0,5, vorteilhaft kleiner als 0,3 ist.

9. Kunsistoffkörper nach einem der Ansprüche 1 bis 8, wobei
die Festigkeit des Kunststoffkörpers im Bereich des Verdrängungskörpers (16, 40, 41, 42) geringer als die Festigkeit des ersten Vollkörpers (53) und größer als die Festigkeit des Hohlkörpers (52) ist.

10. Kunststoffkörper nach einem der Ansprüche 1 bis 9, wobei
die Gesamtlänge des ersten und zweiten Vollkörpers (53, 63) weniger als 50% der Länge (q) des rohrförmigen Hohlkörpers (52) beträgt.

11. System mit einer Fertigungsanlage zur Herstellung eines mindestens teilweise rohrförmigen Kunststoffkörpers in einem Spritzgussverfahren und mit einem Verdrängungskörper, mit einer Spritzgussform (17), die eine Kavität (54) begrenzt und die einen Anguss (18) zur Zufuhr von Kunststoffschmelze und eine Injektordüse (22) zur Einbringung von Fluid besitzt, wobei die Injektordüse (22) einen Aufsteckabschnitt (31) für den Verdrängungskörper (16, 40, 41, 42) besitzt,
wobei die Kavität (54) eine längliche Gestalt mit einem ersten Ende (68) und einem zweiten Ende (69) besitzt und wobei die Injektordüse (22) zwischen den Enden (68, 69) der Kavität (54) angeordnet ist, wobei die Fertigungsanlage (57) eine Nebenkavität (20) besitzt, die über ein Absperrelement (21) von der Kavität (54) trennbar ist, wobei die Verbindungsöffnung (58) von Kavität (54) und Nebenkavität (20) einen Durchmesser (i) besitzt, der kleiner als der Durchmesser (d) des Verdrängungskörpers (16, 40, 41, 42) ist.

12. System nach Anspruch 11, wobei
das Verhältnis des größten Durchmessers (f) des Aufsteckabschnitts (31) zum Durchmesser (d) des Verdrängungskörpers (16, 40, 41, 42) kleiner als 0,7, insbesondere kleiner als 0,5, vorteilhaft kleiner als 0,3 ist.

13. System nach Anspruch 11 oder 12, wobei
der Aufsteckabschnitt (31) konisch ausgebildet ist.

14. System nach einem der Ansprüche 11 bis 13, wobei
das Verhältnis des Außendurchmessers (a) des Kunststoffkörpers in seinem rohrförmigen Bereich zum größten Durchmesser (e) der Injektordüse (22) größer als 1,3, insbesondere größer als 2, vorteilhaft größer als 3 ist.

15. System nach einem der Ansprüche 11 bis 14, wobei
der Durchmesser (k) des Angusses (18) kleiner als der Durchmesser (d) des Verdrängungskörpers (16, 40, 41, 42) ist.

## Claims

1. Plastic body, in particular handle tube (7), for a portable, hand-guided working implement, wherein the plastic body is designed as a tubular hollow body (52) in a central region, wherein the tubular hollow body (52) is sealed at both ends (55, 56) by a closed solid body (53, 63) each, wherein a displacement body (16, 40, 41, 42) placed at the transition between the hollow body (52) and the first solid body (53) is provided at a first end (55) of the tubular hollow body (52),
wherein a cavity extending between the tubular hollow body (52) and the second solid body (63) is formed at a second end (56) of the tubular hollow body (52).

2. Plastic body according to claim 1,
wherein the displacement body (16, 40, 41, 42) has an opening (23) for a push-on section (31) of an injector nozzle (22).

3. Plastic body according to claim 2,
wherein the displacement body (16, 40, 41, 42) comprises a cylindrical section (43) and a tapering section (44, 45, 46, 47), the tapering section (44, 45, 46, 47) projecting into the first solid body (53).

4. Plastic body according to claim 3,
wherein the tapering section (44, 45, 46) of the displacement body (16, 40, 41) is designed as a paraboloid.

5. Plastic body according to claim 3,
wherein the tapering section (47) of the displacement body (42) is a body of revolution from a circle segment.

6. Plastic body according to any of claims 3 to 5,
wherein the ratio of the height (h₁, h₂, h₃, h₄) of the displacement body (16, 40, 41, 42) to the diameter (d) of the cylindrical section (43) of the displacement body (16, 40, 41, 42) is 0.6 to 2, wherein the ratio of the height (z) of the cylindrical section (43) to the diameter (d) in the cylindrical section is in particular 0.1 to 0.3.

7. Plastic body according to any of claims 1 to 6,
wherein the displacement body (16, 40, 41, 42) has at least one stiffening rib (64) on the side bounding the hollow body (52).

8. Plastic body according to any of claims 1 to 7,
wherein the plastic body has an injector opening (59) which is positioned approximately between the tubular hollow body (52) and the cavity (62), wherein the injector opening (59) is in particular the sole connection of the hollow body (52) to the outside, wherein the ratio of the diameter (1) of the injector opening (59) to the diameter (d) of the displacement body (16, 40, 41, 42) is advantageously less than 0.7, in particular less than 0.5 and expediently less than 0.3.

9. Plastic body according to any of claims 1 to 8,
wherein the strength of the plastic body in the region of the displacement body (16, 40, 41, 42) is lower than the strength of the first solid body (53) and higher than the strength of the hollow body (52).

10. Plastic body according to any of claims 1 to 9,
wherein the overall length of the first and second solid bodies (53, 63) is less than 50% of the length (q) of the tubular hollow body (52).

11. Manufacturing system for the production of an at least partially tubular plastic body in an injection moulding process, comprising a displacement body and an injection mould (17) which bounds a cavity (54) and which has a sprue (18) for the supply of plastic melt and an injector nozzle (22) for the introduction of fluid, the injector nozzle (22) having a push-on section (31) for the displacement body (16, 40, 41, 42),
wherein the cavity (54) has an oblong shape with a first end (68) and a second end (69) and the injector nozzle (22) is placed between the ends (68, 69) of the cavity (54), wherein the manufacturing system (57) has an auxiliary cavity (20) which can be isolated from the cavity (54) via a shutoff element (21), wherein the connection opening (58) between the cavity (54) and the auxiliary cavity (20) has a diameter (i) which is smaller than the diameter (d) of the displacement body (16, 40, 41, 42).

12. System according to claim 11,
wherein the ratio of the maximum diameter (f) of the push-on section (31) to the diameter (d) of the displacement body (16, 40, 41, 42) is less than 0.7, in particular less than 0.5 and expediently less than 0.3.

13. System according to claim 11 or 12,
wherein the push-on section (31) is conical.

14. System according to any of claims 11 to 13,
wherein the ratio of the external diameter (a) of the plastic body in its tubular region to the maximum diameter (e) of the injector nozzle (22) is more than 1.3, in particular more than 2 and expediently more than 3.

15. System according to any of claims 11 to 14,
wherein the diameter (k) of the sprue (18) is smaller than the diameter (d) of the displacement body (16, 40, 41, 42).

## Revendications

1. Corps en matière plastique, en particulier poignée tubulaire (7) pour un appareil portatif tenu à la main, étant précisé que le corps en matière plastique est conçu, dans une zone centrale, comme un corps creux tubulaire (52), que le corps creux tubulaire (52) est fermé à chacune de ses deux extrémités (55, 56) par un corps plein fermé (53, 63), qu'il est prévu à une première extrémité (55) du corps creux tubulaire (52) un corps de refoulement (16, 40, 41, 42) qui est disposé au niveau de la transition entre le corps creux (52) et le premier corps plein (53), et qu'il est prévu à une seconde extrémité (56) du corps creux tubulaire (52) une cavité qui s'étend entre le corps creux tubulaire (52) et le second corps plein (63).

2. Corps en matière plastique selon la revendication 1,
étant précisé que le corps de refoulement (16, 40, 41, 42) présente une ouverture (23) pour une partie d'emboîtement (31) d'une buse d'injecteur (22).

3. Corps en matière plastique selon la revendication 2,
étant précisé que le corps de refoulement (16, 40, 41, 42) présente une partie cylindrique (43) et une partie effilée (44, 45, 46, 47), la partie effilée (44, 45, 46, 47) dépassant dans le premier corps plein (53).

4. Corps en matière plastique selon la revendication 3,
étant précisé que la partie effilée (44, 45, 46) du corps de refoulement (16, 40, 41) a la forme d'un paraboloïde.

5. Corps en matière plastique selon la revendication 3,
étant précisé que la partie effilée (47) du corps de refoulement (42) est un corps de révolution composé d'un segment de cercle.

6. Corps en matière plastique selon l'une des revendications 3 à 5,
étant précisé que le rapport de la hauteur (h₁, h₂, h₃, h₄) du corps de refoulement (16, 40, 41, 42) sur le diamètre (d) de la partie cylindrique (43) du corps de refoulement (16, 40, 41, 42) va de 0,6 à 2, étant précisé que le rapport de la hauteur (z) de la partie cylindrique (43) sur le diamètre (d) dans ladite partie cylindrique va en particulier de 0,1 à 0,3.

7. Corps en matière plastique selon l'une des revendications 1 à 6,
étant précisé que le corps de refoulement (16, 40, 41, 42) présente, sur son côté qui délimite le corps creux (52), au moins une nervure raidisseuse (64).

8. Corps en matière plastique selon l'une des revendications 1 à 7,
étant précisé que le corps en matière plastique présente une ouverture d'injecteur (59) qui est disposée à peu près entre le corps creux tubulaire (52) et la cavité (62), que l'ouverture d'injecteur (59) est en particulier la seule liaison entre le corps creux (52) et l'extérieur, et que le rapport du diamètre (1) de l'ouverture d'injecteur (59) sur le diamètre (d) du corps de refoulement (16, 40, 41, 42) est avantageusement inférieur à 0,7, en particulier inférieur à 0,5, avantageusement inférieur à 0,3.

9. Corps en matière plastique selon l'une des revendications 1 à 8,
étant précisé que la solidité du corps en matière plastique dans la zone du corps de refoulement (16, 40, 41, 42) est inférieure à la solidité du premier corps plein (53) et supérieure à la solidité du corps creux (52).

10. Corps en matière plastique selon l'une des revendications 1 à 9,
étant précisé que la longueur totale des premier et second corps pleins (53, 63) représente moins de 50 % de la longueur (q) du corps creux tubulaire (52).

11. Système avec une installation de fabrication pour fabriquer par moulage par injection un corps en matière plastique au moins en partie tubulaire et avec un corps de refoulement, avec un moule à injection (17) qui délimite une cavité (54) et qui comporte une entrée (18) pour amener une matière plastique fondue, et une buse d'injecteur (22) pour introduire un fluide,
étant précisé que la buse d'injecteur (22) comporte une partie d'emboîtement (31) pour le corps de refoulement (16, 40, 41, 42), que la cavité (54) a une forme oblongue avec une première extrémité (68) et une seconde extrémité (69), que la buse d'injecteur (22) est disposée entre les extrémités (68, 69) de la cavité (54), que l'installation de fabrication (57) présente une cavité secondaire (20) qui est apte à être séparée de la cavité (54) par un élément d'obturation (21), et que l'ouverture de liaison (58) entre la cavité (54) et la cavité secondaire (20) présente un diamètre (i) qui est plus petit que le diamètre (d) du corps de refoulement (16, 40, 41, 42).

12. Système selon la revendication 11,
étant précisé que le rapport du diamètre maximal (f) de la partie d'emboîtement (31) sur le diamètre (d) du corps de refoulement (16, 40, 41, 42) est inférieur à 0,7, en particulier inférieur à 0,5, avantageusement inférieur à 0,3.

13. Système selon la revendication 11 ou 12,
étant précisé que la partie d'emboîtement (31) a une forme conique.

14. Système selon l'une des revendications 11 à 13,
étant précisé que le rapport du diamètre extérieur (a) du corps en matière plastique dans sa zone tubulaire sur le diamètre maximal (e) de la buse d'injecteur (22) est supérieur à 1,3, en particulier supérieur à 2, avantageusement supérieur à 3.

15. Système selon l'une des revendications 11 à 14,
étant précisé que le diamètre (k) de l'entrée (18) est plus petit que le diamètre (d) du corps de refoulement (16, 40, 41, 42).
